# FASCICULE DE BREVET EUROPEEN

(11) **EP 3 455 535 B1**
(45) Date de publication et mention de la délivrance du brevet: **13.05.2020**
(21) Numéro de dépôt: 17725299.6
(22) Date de dépôt: 20.04.2017
(51) Int. Cl.: F16L 37/098

(54) **RACCORD A DECONNEXION PAR TRACTION SUR UNE BAGUE**
VERBINDER MIT LÖSUNG DURCH ZIEHEN AN EINEM RING
CONNECTOR THAT DISCONNECTS BY PULLING ON A RING

(30) Priorité: 11.05.2016 FR 1654186
(43) Date de publication de la demande: 20.03.2019
(73) Titulaire: A Raymond Et Cie, 38000 Grenoble (FR)
(72) Inventeur: HAMADENE, Sofien, 38960 Saint Etienne de Crossey (FR); BOIS, Mathias, 38120 Saint Egrève (FR)
(74) Mandataire: Prugneau, Philippe
(86) Numéro de dépôt international: PCT/FR2017/050941
(87) Numéro de publication internationale: WO 2017/194850

(56) Documents cités:
- DE-U1- 8 709 151
- DE-U1- 29 610 487
- US-A1- 2012 319 401

## Description

### Domaine technique

La présente invention se rapporte au domaine des raccords tubulaires dans l'industrie automobile pour connecter deux conduites de transport de fluide et en particulier pour le raccordement de l'injecteur de carburant, du filtre, du radiateur ou de tout autre équipement adapté et/ou dans tout autre domaine technique similaire.

Plus particulièrement, l'invention concerne un raccord tubulaire comprenant un embout femelle présentant un corps creux tubulaire qui s'étend suivant une direction axiale et formant un orifice axial dans lequel un embout mâle pourvu d'une collerette est destiné à être inséré axialement, le corps creux de l'embout femelle comprenant un organe de verrouillage cranté s'étendant axialement le long du corps creux et qui est conçu pour être déformé élastiquement radialement par interférence mécanique avec la collerette lors de l'insertion de l'embout mâle dans l'orifice de l'embout femelle et pour se verrouiller au dos de la collerette quand l'embout mâle est complètement enfoncé dans l'orifice de l'embout femelle.

### Technique antérieure

Un tel raccord tubulaire pour raccorder des circuits de climatisation ou de direction assistée pour véhicule automobile est déjà connu notamment du document de brevet FR2944084.

Dans ce raccord tubulaire connu, une bague de verrouillage pour raccorder deux embouts mâle et femelle est montée autour du corps de l'embout femelle et est apte à verrouiller réversiblement des crans de l'embout femelle contre une collerette de l'embout male. Dans ce raccord, les crans de l'embout femelle sont agencés sur l'extrémité libre de doigts flexibles, les doigts traversant en outre axialement la bague par des ouvertures agencées sur la circonférence de la bague. De plus, dans ce raccord, la bague comprend une patte de maintien pour s'accrocher à la collerette de l'embout mâle.

Ce raccord tubulaire connu présente cependant plusieurs inconvénients. D'abord, la structure des doigts flexibles de l'embout femelle et de la bague est complexe et le raccord semble peu compact. Ensuite, dans ce raccord, pour connecter les deux embouts, suite à l'enfoncement axial de l'embout mâle dans l'embout femelle, en plus d'un coulissement axial manuel de la bague pour s'agencer radialement autour des doigts afin de bloquer les crans sur la collerette, un verrouillage supplémentaire doit être réalisé en accrochant la patte de maintien de la bague par un basculement manuel de celle-ci sur la collerette. Inversement, pour déconnecter les deux embouts il faut commencer par basculer manuellement la patte de maintien de la bague de sorte à la désengager de la collerette, puis à faire coulisser axialement manuellement la bague dans le sens d'insertion de l'embout mâle pour que les doigts s'écartent suffisamment afin de libérer la collerette.

Il en résulte que le raccordement et la déconnexion des deux embouts se font chacun par l'intermédiaire de plusieurs étapes manuelles qui peuvent être laborieuses pour des opérateurs et allonger le temps de montage ou de démontage.

Le document EP1561064 concerne également un raccord tubulaire rapide avec un embout femelle présentant un corps creux définissant un orifice dans lequel un embout mâle est inséré axialement. Sur l'extérieur du corps sont agencées deux branches élastiques d'encliquetage s'étendant axialement portant sur une de leur extrémité des crans pour cramponner l'embout femelle au niveau d'une collerette de l'embout mâle. Les branches sont chacune reliées au corps au niveau d'un point de basculement par une charnière sous forme d'une entretoise. Pour encliqueter la collerette de l'embout mâle, les crans doivent s'écarter en appuyant sur l'autre extrémité des branches. Dans ce dispositif, afin de limiter l'encombrement du raccord, la charnière présente une épaisseur fine. Du coup, sous l'effet d'une température et/ou d'une pression du fluide pouvant être élevées dans le raccord, celui-ci peut se déformer, notamment au niveau des charnières. Cette déformation peut conduire à une difficulté voir une impossibilité de démontage du raccord, ou encore si la déformation est trop importante, des fuites peuvent être provoquées. Ainsi l'utilisation de branches élastiques raccordées par des charnières en périphérie du corps creux d'un embout femelle pour encliqueter un embout mâle n'est pas adaptée pour certaines utilisations dans l'industrie automobile.

Les documents US2012/319401 et DE29610487 concernent également des raccords tubulaires.

### Résumé de l'invention

Le but de l'invention est donc de pallier les inconvénients indiqués plus haut.

A cet effet, l'invention a pour objet un raccord tubulaire comprenant un embout femelle présentant un corps creux tubulaire qui s'étend suivant une direction axiale et formant un orifice axial dans lequel un embout mâle pourvu d'une collerette est destiné à être inséré axialement, le corps creux de l'embout femelle comprenant un organe de verrouillage cranté s'étendant axialement le long du corps creux et qui est conçu pour être déformé élastiquement radialement par interférence mécanique avec la collerette lors de l'insertion de l'embout mâle dans l'orifice de l'embout femelle et pour se verrouiller au dos de la collerette quand l'embout mâle est complètement enfoncé dans l'orifice de l'embout femelle, caractérisé en ce qu'il comprend en outre une bague montée coulissante coaxialement à l'orifice autour de l'embout femelle et qui forme une rampe oblique par rapport à la direction axiale et inclinée radialement vers l'extérieur du corps creux pour déformer élastiquement radialement par effet levier l'organe de verrouillage lorsque la bague subit une traction axiale dans le sens d'insertion de l'embout mâle dans l'embout femelle de sorte à libérer l'embout mâle de l'embout femelle.

Le raccord selon l'invention peut présenter les particularités suivantes :
- l'organe de verrouillage peut comprendre deux doigts crantés répartis autour de l'orifice de l'embout femelle, chaque doigt cranté comprenant deux épaulements latéraux, et en ce que la bague peut former pour chaque doigt cranté deux rampes obliques parallèles sur lesquelles s'appuient respectivement les deux épaulements latéraux du doigt cranté ;
- la bague peut comprendre deux ouvertures latérales réparties sur la circonférence de la bague qui sont bordées chacune par deux rampes parallèles ;

- les deux rampes parallèles peuvent être jointes par un voile de matière de renfort ;
- les deux épaulements latéraux d'un doigt cranté peuvent faire partie d'une nervure latérale qui coulisse axialement dans des rainures de la bague ;
- la bague peut être maintenue autour de l'embout femelle par des clips ;
- la bague peut comprendre au niveau des ouvertures latérales une nervure en saillie radiale agencée pour maintenir la bague autour de l'embout femelle.

L'idée à la base de l'invention est de pouvoir raccorder et déconnecter rapidement et aisément deux embouts mâle et femelle avec un raccord tubulaire facile d'utilisation, composé de deux pièces principales.

Avec l'agencement selon l'invention, l'embout mâle se raccorde automatiquement dans le raccord par simple encliquetage par insertion axiale dans l'orifice de l'embout femelle. L'embout mâle se déconnecte simplement du raccord, en tirant le raccord tout en effectuant une traction axiale sur une bague coulissante entourant l'embout femelle.

Par ailleurs, avec l'agencement selon l'invention, on peut assembler facilement le raccord tubulaire, la bague coulissant de façon contrôlée le long de l'embout femelle. Le raccord tubulaire selon l'invention est compact, et avec une telle structure les risques de déformation qui peuvent être engendrées par des températures et/ou pression élevées sont réduits.

D'autres caractéristiques, avantages et détails de la présente invention ressortiront à la lecture de la description suivante d'un exemple de réalisation de l'invention donné à titre illustratif et non limitatif, cette description étant réalisée en référence avec les dessins présentés ci-dessous.

### Présentation sommaire des dessins

La présente invention sera mieux comprise et d'autres avantages apparaîtront à la lecture de la description qui suit et des dessins annexés dans lesquels :
- la figure 1 illustre de façon schématique selon une vue éclatée en perspective, le raccord tubulaire selon un premier mode de réalisation de l'invention avec l'embout femelle, la bague et l'embout mâle ;
- la figure 2 illustre de façon schématique selon une vue en double coupe transversale et en perspective, le raccord tubulaire de la figure 1 avec la bague montée sur l'embout femelle ;
- la figure 3 illustre selon une vue en perspective le raccord tubulaire selon l'invention en position de pré-raccordement sur l'embout mâle ;
- les figures 4A et 4B illustrent respectivement selon une vue de profil et une vue en coupe transversale le raccord tubulaire selon l'invention dans un état de raccordement avec l'embout mâle ;
- les figures 5A et 5B illustrent respectivement selon une vue de profil et une vue en coupe transversale le raccord tubulaire selon l'invention dans un état intermédiaire de déconnexion avec l'embout mâle ;
- la figure 6 illustre selon une vue en perspective un raccord tubulaire selon un second mode de réalisation de l'invention avec la bague montée sur l'embout femelle ;
- la figure 7 illustre selon une vue en perspective la bague du raccord tubulaire selon le second mode de réalisation ;
- la figure 8 illustre de façon schématique selon une vue en coupe transversale et en perspective, le raccord tubulaire de la figure 6 avec la bague montée sur l'embout femelle.

### Description des modes de réalisation

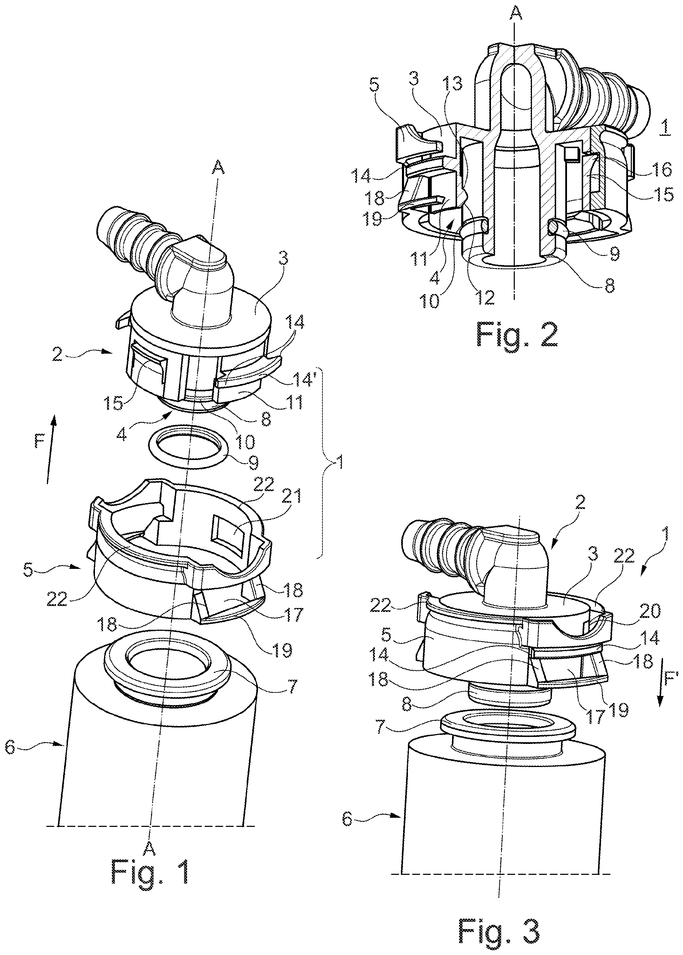

La figure 1 présente une vue éclatée de différentes parties d'un raccord tubulaire 1 selon un premier mode de réalisation de l'invention.

Le raccord tubulaire 1 comporte ici un embout tubulaire de connexion femelle (embout femelle) 2 coudé comprenant un corps 3 creux principal de forme tubulaire qui s'étend suivant une direction axiale A et qui présente un orifice 4 axial.

La figure 1 montre une bague 5 emboitable coaxialement à l'orifice 4 autour du corps 3 (selon la flèche F) et la figure 2 montre la bague 5 emboîtée sur le corps 3 de l'embout femelle 2 du raccord tubulaire 1.

La figure 1 montre un embout tubulaire de connexion mâle (embout mâle) 6 qui est destiné à s'insérer axialement dans l'orifice 4 de l'embout femelle 2.

L'embout mâle 6 est ici sous forme d'une embase de forme cylindrique allongée et présente à son extrémité libre une butée radiale de raccordement formée par une collerette 7, le diamètre de la collerette 7 étant légèrement inférieur à celui du diamètre intérieur de l'orifice 4.

Comme visible encore sur les figures 1 et 2, dans le corps 3 creux s'étend ici axialement un conduit 8 par lequel peut circuler un fluide.

Le diamètre externe du conduit 8 est ajusté par rapport au diamètre interne de la collerette 7, de sorte que lors de l'insertion axiale de l'embout mâle 6 dans le corps 3 de l'embout femelle 2, la collerette 7 se loge ici dans l'orifice 4 entre le corps 3 de l'embout femelle 2 et le conduit 8.

L'étanchéité entre les deux embouts femelle 2 et mâle 6 peut être assurée en partie par un joint 9 venant se loger dans une gorge extérieure annulaire 10 du conduit 8 comme visible sur la figure 2.

Selon l'invention, l'élément femelle 2 présente au moins un organe de verrouillage sous forme de doigt 11 cranté flexible qui s'étend suivant la direction axiale A et qui est conçu pour se déformer élastiquement radialement vers l'extérieur du corps 3 de l'embout femelle 2 sous l'effet d'une interférence mécanique avec la collerette 7 lorsque que l'embout mâle 6 est inséré dans l'orifice 4 de l'embout femelle 2.

Le corps 3 tubulaire peut comporter plusieurs organes de verrouillage 11 répartis sur la circonférence du corps 3.

Ici, le corps 3 tubulaire comporte deux doigts 11 crantés diamétralement opposés par rapport à l'orifice 4 qui sont délimités chacun par deux fentes axiales dans le corps 3 qui vont jusqu'au bord de l'orifice 4.

Chaque doigt 11 cranté présente une extrémité libre formant une nervure 12 intérieure inclinée radialement, bien visible sur la figure 2.

Lors de l'insertion axiale de l'embout mâle 6 dans l'orifice 4 de l'embout femelle 2, la face frontale de la collerette 7 (dans le sens d'insertion de l'embout mâle 6 dans le corps 3) s'appuie sur cette nervure 12 pour écarter radialement le doigt 11 et autoriser le passage de la collerette 7 dans le corps 3 creux.

La nervure 12 présente aussi un cran 13 harpon qui de façon connue, après le resserrement élastique du doigt 11, vient en contact sur la face dorsale de la collerette 7 de sorte à bloquer axialement dans une position d'enfoncement complet et de raccordement l'embout mâle 6 dans l'orifice 4 de l'embout femelle 2 du raccord tubulaire 1.

Selon l'invention, chaque doigt 11 cranté présente au moins un épaulement 14 latéral qui saille radialement par rapport à la circonférence externe du corps 3 creux. Ici, deux épaulements 14 latéraux sont représentés et ils sont reliés par de la matière de sorte à former une nervure 14' latérale qui saille radialement vers l'extérieur du corps 3. Chaque épaulement 14 est destiné à coopérer avec une rampe 18 présente sur la bague 5 qui sera décrite plus loin.

Selon le premier mode de réalisation de l'invention, le corps 3 creux peut aussi comprendre au moins un clip 15 flexible conçu pour se déformer élastiquement radialement vers l'intérieur du corps 3 par interférence mécanique avec la bague 5 lorsque celle-ci est emboitée axialement autour du corps 3.

Ici, deux clips 15 flexibles sont diamétralement opposés, chacun étant agencé de part et d'autre d'un doigt 11 cranté ou positionné entre deux doigts 11 crantés.

Les clips 15 flexibles s'étendent axialement le long du corps 3 et sont orientés dans le sens opposé aux doigts 11 crantés. Les clips 15 ont une extrémité libre qui saille radialement vers l'extérieur du corps 3 formant un cran de retenue 16 pour maintenir la bague 5 autour du corps 3, de manière coulissante, comme cela sera expliqué plus loin.

La bague 5 comprend sur son pourtour périphérique une ouverture 17 latérale délimitée axialement sur les cotés par une rampe 18 oblique, inclinée radialement vers l'extérieur avec une pente orientée dans le sens opposé à l'insertion de l'embout mâle 6. Ici, deux ouvertures 17 latérales sont réparties sur le pourtour périphérique de la bague 5, par exemple diamétralement opposées, et sont chacune bordées par deux rampes 18 parallèles.

Les rampes 18 obliques délimitant une ouverture 17 latérale peuvent être jointes par un voile 19 de matière afin de renforcer la structure de la bague 5.

La bague peut comprendre de façon optionnelle des rainures 20 agencées axialement au dessus des rampes 18 dans lesquels les épaulements 14 coulissent axialement lors de l'emboitement axial de la bague 5 autour du corps 3 de l'embout femelle 2, les rainures 20 servant de guidage pour l'emboitement.

Selon l'invention, la bague 5 peut comprendre en outre un moyen de blocage 21 agencé sur la périphérie de la bague 5 et interagissant avec le clip 15 flexible agencé sur le corps 3 de l'embout femelle 2.

Selon une première variante du premier mode de réalisation, le moyen de blocage 21 est un évidemment formant une sorte de rainure agencée sur la périphérie interne de la bague 5. La hauteur de la rainure est choisie de sorte qu'elle soit globalement équivalente à la hauteur du clip 15 flexible afin de pouvoir autoriser le coulissement axial de la bague 5 le long du corps 3 sur la hauteur de la rainure.

Selon une seconde variante du premier mode de réalisation, non illustrée, le moyen de blocage 21 peut être une fenêtre dont la hauteur est également globalement équivalente à la hauteur du clip 15 flexible afin de pouvoir autoriser le coulissement axial de la bague 5 le long du corps 3 sur la hauteur de la fenêtre.

Selon l'invention, la bague 5 présente aussi sur la périphérie extérieure des moyens de préhension 22, qui peuvent par exemple saillir radialement pour pouvoir être saisi par un opérateur afin d'exercer plus facilement une traction axiale sur la bague 5.

Avant l'utilisation du raccord tubulaire 1, la bague 5 doit être emboitée axialement autour du corps 3 de l'embout femelle 2 selon la flèche F. Pour cela la bague 5 est positionnée telle qu'indiquée sur la figure 1, c'est-à-dire les ouvertures 17 latérales de la bague 5 sont en aplomb des doigts 11 crantés flexibles de l'embout femelle 2, et les moyens de blocages 21 de la bague 5 sont en aplomb des clips 15 flexibles de l'embout femelle 2.

Selon le premier mode de réalisation, lors de l'emboitement axial de la bague 5 autour du corps 3, la surface supérieure de la bague 5 va appuyer sur les clips 15 flexibles en saillie. Ceux-ci vont alors se rétracter élastiquement vers l'intérieur du corps 3 de sorte à laisser passer la partie supérieure de la bague 5 autour du corps 3. Puis les clips 15 vont se déployer au niveau de l'évidemment ou de la fenêtre servant de moyens de blocage 21. Au cours de l'emboitement de la bague autour du corps, les épaulements 14 peuvent coulisser axialement dans les rainures 20 de la bague optionnellement agencées au dessus des rampes 18. Ainsi, les rainures 20 tiennent lieu d'indexage pour bien orienter la bague 5 et le corps 3 l'un par rapport à l'autre lors de l'emboitement.

Selon l'invention, dans cette position d'emboitement, la bague 5 peut coulisser axialement le long du corps 3.

Néanmoins, le coulissement axial est limité en ce que le cran de retenue 16 en saillie vient en butée avec l'un ou l'autre des cotés longitudinaux de l'évidemment ou de la fenêtre. Comme mentionné précédemment, la bague 5 peut coulisser axialement uniquement sur la hauteur du moyen de blocage 21.

Afin de mieux comprendre l'invention, les étapes de raccordement de l'embout mâle 6 dans l'embout femelle 2 et de déconnexion illustrées sur les figures 3 à 5 vont maintenant être rapidement décrites.

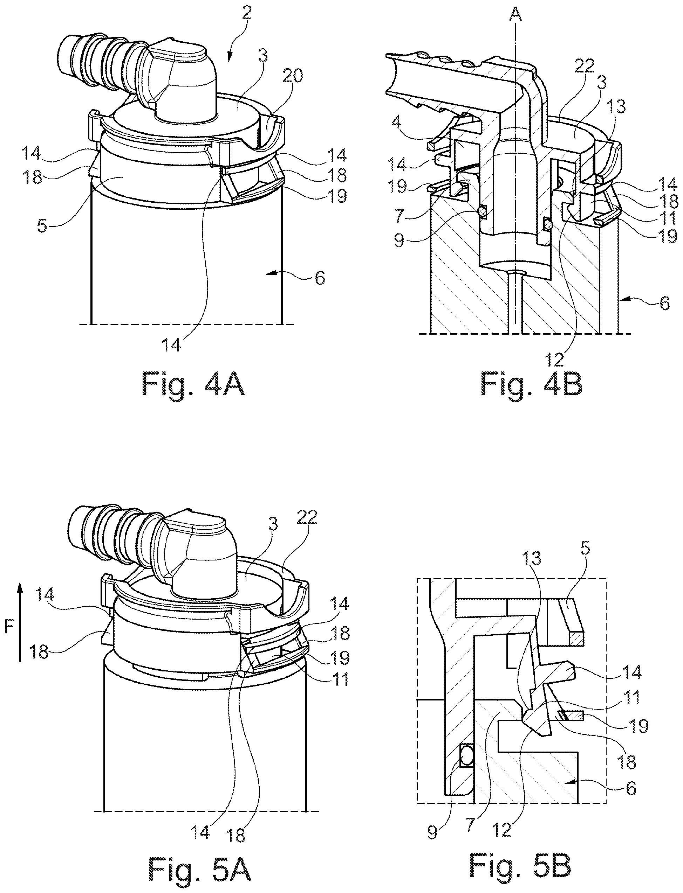

Pour raccorder l'embout mâle 6 à l'embout femelle 2, l'embout mâle 6 est enfoncé axialement dans l'orifice 4 du raccord tubulaire 1 selon la flèche F' illustrée sur la figure 3. Comme mentionné précédemment, la collerette 7 vient en appui sur la nervure 12 inclinée des doigts 11 crantés pour écarter élastiquement les doigts 11 radialement vers l'extérieur du corps 3 et ainsi autoriser le passage de la collerette 7. Après le passage de la collerette 7 au-delà des nervures 12, les doigts 11 se resserrent élastiquement et les crans 13 harpon viennent bloquer axialement la collerette 7. L'embout mâle 6 complètement enfoncé dans l'orifice 4 de l'embout femelle 2 est alors dans une position de raccordement dans le raccord tubulaire 1. La position de raccordement est illustrée sur les figures 4A et 4B. Sur la figure 4A, il est bien visible que dans cette position chaque épaulement 14 du corps 3 de l'embout femelle 2 se trouve en appui au niveau du point bas des rampes 18 obliques de la bague 5. Selon l'invention, comme visible sur les figures 4A et 4B, il est avantageux d'avoir un raccord tubulaire 1 qui ne dépasse pas le diamètre de l'embase de l'embout mâle 6. Le raccord tubulaire 1 selon l'invention est donc compact.

Maintenant, pour déconnecter l'embout mâle 6 du raccord tubulaire 1, comme illustré figures 5A et 5B, un opérateur tient avec une de ses mains l'embout mâle 6 et positionne son autre main au niveau des moyens de préhension 22 de la bague 5. En effectuant une traction axiale selon la flèche F au niveau des moyens de préhension 22, la bague 5 coulisse axialement le long du corps 3, les épaulements 14 glissent alors sur les rampes 18 obliques, de sorte que les épaulements 14 s'écartent radialement vers l'extérieur du corps 3. Par effet levier, les doigts 11 crantés s'écartent eux aussi radialement vers l'extérieur du corps 3 comme cela est visible sur la figure 5B, jusqu'à atteindre un écartement suffisant pour que les crans 13 harpon ne soient plus en contact avec la collerette 7. En tirant la bague 5 dans le sens d'insertion de l'embout mâle 6, la collerette 7 est donc libérée des crans 13 harpon des doigts 11, déconnectant ainsi l'embout mâle 6 du raccord tubulaire 1.

Notons qu'après la déconnexion des embouts 2, 6, les épaulements 14 reviennent par retour élastique au point bas des rampes 18 obliques, les doigts 11 crantés se resserrent. La bague 5 revient donc automatiquement dans sa position initiale telle qu'illustrée sur la figure 2.

Ainsi, selon l'invention, l'embout mâle 6 est connecté au raccord 1 tubulaire dans l'orifice 4 de l'embout femelle 2 par une insertion axiale simple, et les embouts 2 et 6 sont déconnectés simplement par une traction axiale réalisée sur la bague 5.

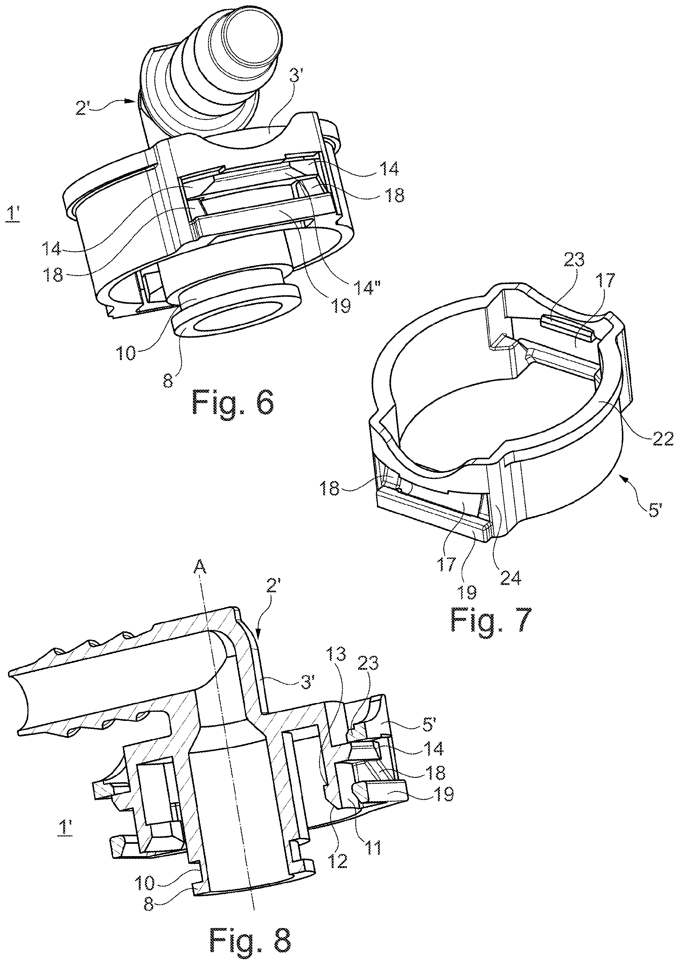

Sur les figures 6 à 8 est montré un embout tubulaire 1' selon un second mode de réalisation, avec une bague 5' montée sur un embout femelle 2'.

Dans ce qui suit, il est entendu que les éléments communs aux raccords tubulaire 1, 1' des deux modes de réalisation présentent les mêmes références.

L'embout tubulaire 1' diffère principalement du raccord tubulaire 1 en ce que l'embout femelle 2' ne comprend pas de clip flexible et la bague 5' ne comprend pas de moyens de blocage. Ainsi, selon l'invention, le raccord tubulaire 1' est de structure encore plus simple que dans l'art antérieur.

Selon l'invention, l'embout femelle 2' comprend un doigt flexible 11' remplissant une double fonction, la première étant comme dans le premier mode de réalisation d'autoriser la déconnection de l'embout mâle 6 du raccord tubulaire 1' en effectuant une traction axiale sur la bague 5', la seconde étant une fonction de clippage lors de l'emboitement axial de la bague 5' autour du corps 3' de l'embout femelle 2'.

Le doigt flexible 11' présente une rainure 14" reliant les deux épaulements 14 qui est oblique, inclinée radialement vers l'intérieur.

L'ouverture 17 latérale de la bague 5' est ici délimitée sur le coté supérieur, dans le sens d'emboitement de la bague 5', par une rainure 23 en saillie radiale qui est oblique, inclinée radialement vers l'extérieur.

Ici sont illustrés un corps 3' avec deux doigts 11' flexibles répartis sur le pourtour du corps 3' et une bagues 5' avec deux ouvertures latérales 17 réparties sur la périphérie de sorte que lors de l'emboitement de la bague 5' autour du corps 3' de l'embout femelle 2', les doigts 11' flexibles sont à l'aplomb des ouvertures latérales 17.

Ainsi, au cours de l'emboitement axial de la bague 5' autour du corps 3', les rainures 23 inclinées de la bague 5' viennent en contact avec les rainures 14" inclinées des doigts 11' et vont appuyer sur les rainures 14" des doigts 11' flexibles. Ceux-ci vont alors se rétracter élastiquement vers l'intérieur du corps 3' de sorte à laisser passer la partie supérieure de la bague 5' avec les rainures 23 autour du corps 3'. Puis les doigts 11' vont se déployer élastiquement au niveau des ouvertures 17' latérales de la bague 5' de sorte que les épaulements 14 se trouvent positionnés au niveau du point bas des rampes 18 obliques. Dans ce second mode de réalisation, au niveau des ouvertures 17 latérales, les rampes 18 sont protégées par des bordures 24 s'étendant axialement à l'extérieur de la bague 5'. Avantageusement, ces bordures protègent les doigts 11' des chocs pouvant se produire sur l'embout tubulaire 1'.

Selon l'invention, le raccord tubulaire 1, 1' est compact et présente une structure de complexité moindre par rapport aux raccords existants.

Avantageusement, la bague 5, 5' entourant l'embout femelle 2, 2' permet de protéger l'embout tubulaire 1, 1' de possibles infiltrations de poussière ou autres matériaux dans l'orifice 4 des corps 3, 3'.

Les éléments du raccord 1 tubulaire selon l'invention, c'est-à-dire l'embout femelle 2, 2' et la bague 5, 5', peuvent être réalisés en matière plastique, par exemple par moulage par injection ou par impression 3D.

Selon l'invention, comme décrit ci-dessus, dans le raccord tubulaire 1, 1', la bague 5, 5' ne comporte aucun élément qui nécessite de la flexibilité alors que l'embout femelle 2, 2' présente notamment les doigts 11 crantés comme éléments flexibles. Ainsi, il peut être envisagé de fabriquer la bague 5, 5' et l'embout femelle 1, 1' en deux matériaux différents, notamment il est avantageux de choisir un matériau présentant une dureté supérieure pour la bague 5, 5' que pour l'embout femelle 2, 2'. Ainsi, en cas d'élévation de température ou de pression dans le raccord tubulaire 1, 1', la bague 5, 5' entourant le corps 3, 3' de l'embout femelle 2, 2' peut limiter les risques de déformation.

Naturellement, la présente invention ne se limite nullement à la description ci-dessus d'une de ses mises en œuvre, qui peuvent subir des modifications sans sortir du cadre de l'invention.

## Revendications

1. Raccord tubulaire (1, 1') **caractérisé en ce qu'**il comprend un embout femelle (2, 2') présentant un corps (3) creux tubulaire qui s'étend suivant une direction axiale (A) et formant un orifice (4) axial dans lequel un embout mâle (6) pourvu d'une collerette (7) est destiné à être inséré axialement, **en ce que** ledit corps (3) creux dudit embout femelle (2, 2') comprend un organe de verrouillage (11, 11') cranté s'étendant axialement le long dudit corps (3) creux et qui est conçu pour être déformé élastiquement radialement par interférence mécanique avec ladite collerette (7) lors de ladite insertion dudit embout mâle (6) dans ledit orifice (4) dudit embout femelle (2, 2') et pour se verrouiller au dos de ladite collerette (7) quand ledit embout mâle (6) est complètement enfoncé dans ledit orifice (4) dudit embout femelle (2, 2'), **en ce qu'**il comprend en outre une bague (5, 5') montée coulissante coaxialement audit orifice (4) autour dudit embout femelle (2, 2') et qui forme une rampe (18) oblique par rapport à la direction axiale et inclinée radialement vers l'extérieur dudit corps (3) creux pour déformer élastiquement radialement par effet levier ledit organe de verrouillage (11, 11') lorsque ladite bague (5, 5') subit une traction axiale dans le sens d'insertion dudit embout mâle (6) dans ledit embout femelle (2, 2') de sorte à libérer ledit embout mâle (6) dudit embout femelle (2, 2').

2. Raccord tubulaire (1, 1') selon la revendication 1, **caractérisé en ce que** ledit organe de verrouillage (11, 11') comprend deux doigts (11, 11') crantés répartis autour dudit orifice (4) dudit embout femelle (2, 2'), chaque doigt (11, 11') cranté comprenant deux épaulements (14) latéraux, et **en ce que** ladite bague (5, 5') forme pour chaque doigt (11, 11') cranté deux rampes (18) obliques parallèles sur lesquelles s'appuient respectivement lesdits deux épaulements (14) latéraux du doigt (11, 11') cranté.

3. Raccord tubulaire (1, 1') selon la revendication 2, **caractérisé en ce que** ladite bague (5, 5') comprend deux ouvertures latérales (17) réparties sur le pourtour périphérique de ladite bague (5, 5') qui sont bordées chacune par deux rampes (18) parallèles.

4. Raccord tubulaire (1, 1') selon la revendication 3, **caractérisé en ce que** lesdites deux rampes (18) parallèles sont jointes par un voile (19) de matière de renfort.

5. Raccord tubulaire (1) selon la revendication 2, **caractérisé en ce que** lesdits deux épaulements (14) latéraux d'un doigt cranté (11) font partie d'une nervure (14') latérale qui coulisse axialement dans des rainures (20) de ladite bague (5).

6. Raccord tubulaire (1) selon l'une des revendications précédentes, **caractérisé en ce que** ladite bague (5) est maintenue autour dudit embout femelle (2) par des clips (15).

7. Raccord tubulaire (1') selon l'une des revendications 3 à 4, **caractérisé en ce que** ladite bague (5') comprend au niveau des ouvertures (17) latérales une nervure (23) en saillie radiale agencée pour maintenir ladite bague (5') autour dudit embout femelle (2').

## Patentansprüche

1. Rohrförmiger Anschluss (1, 1'), **dadurch gekennzeichnet,**
**dass** er ein weibliches Ansatzstück (2, 2') mit einem hohlen rohrförmigen Korpus (3), der sich gemäß einer axialen Richtung (A) erstreckt und eine axiale Öffnung (4) ausbildet, in die ein mit einem Kragen (7) versehenes männliches Ansatzstück (6) dazu bestimmt ist, axial eingeführt zu werden, umfasst,
**dass** der hohle Korpus (3) des weiblichen Ansatzstückes (2, 2') ein gezahntes Verrieglungsorgan (11, 11') umfasst, das sich axial entlang des hohlen Korpus (3) erstreckt und das ausgebildet ist, um elastisch radial durch mechanisches Zusammenwirken mit dem Kragen (7) bei dem Einsetzen des männlichen Ansatzstückes (6) in die Öffnung (4) des weiblichen Ansatzstückes (2, 2') deformiert zu werden und sich rückwärtig des Kragens (7) zu verriegeln, wenn das männliche Ansatzstück (6) vollständig in die Öffnung (4) des weiblichen Ansatzstückes (2, 2') eingesetzt ist,
**dass** er ferner einen zu der Öffnung (4) um das weibliche Ansatzstück (2, 2') koaxial verschiebbar montierten Ringkörper (5, 5') umfasst, welcher eine zu der axialen Richtung querverlaufende und radial von dem hohlen Korpus (3) nach außen geneigte Rampe (18) bildet zum elastischen radialen Deformieren durch Hebelwirkung des Verrieglungsorgans (11, 11'), wenn der Ringkörper (5, 5') eine axiale Betätigung in die Einführrichtung des männlichen Ansatzstückes (6) in das weibliche Ansatzstück (2, 2') derart erfährt, dass das männliche Ansatzstück (6) von dem weiblichen Ansatzstück (2, 2') freigegeben wird.

2. Rohrförmiger Anschluss (1, 1') nach Anspruch 1, **dadurch gekennzeichnet, dass** das Verrieglungsorgan (11, 11') zwei gezahnte Stege (11, 11') umfasst, die um die Öffnung (4) des weiblichen Ansatzstückes (2, 2') verteilt sind, wobei jeder gezahnte Steg (11, 11') zwei seitliche Vorsprünge (14) umfasst, und dass der Ringkörper (5, 5') für jeden gezahnten Steg (11, 11') zwei parallele querverlaufende Rampen (18) ausbildet, auf welchen sich jeweils die zwei Vorsprünge (14) der gezahnten Stege (11, 11') abstützen.

3. Rohrförmiger Anschluss (1, 1') nach Anspruch 2, **dadurch gekennzeichnet, dass** der Ringkörper (5, 5') zwei seitliche Durchbrechungen (17) umfasst, die auf dem randseitigen Umfang des Ringkörpers (5, 5') verteilt sind, die jede von zwei parallelen Rampen (18) begrenzt sind.

4. Rohrförmiger Anschluss (1, 1') nach Anspruch 3, **dadurch gekennzeichnet, dass** die zwei parallelen Rampen (18) durch eine Abschnitt (19) aus Verstärkungsmaterial verbunden sind.

5. Rohrförmiger Anschluss (1) nach Anspruch 2, **dadurch gekennzeichnet, dass** die zwei seitlichen Vorsprünge (14) eines gezahnten Stegs (11) Teil einer seitlichen Rippe (14'), die axial in Nuten (20) des Ringkörpers (5) gleitet, sind.

6. Rohrförmiger Anschluss (1) nach einem der vorhergehenden Ansprüche, **dadurch gekennzeichnet, dass** der Ringkörper (5) um das weibliche Ansatzstück (2) durch Klipse (15) gehalten ist.

7. Rohrförmiger Anschluss (1') nach einem der Ansprüche 3 bis 4, **dadurch gekennzeichnet, dass** der Ringkörper (5') auf Höhe der seitlichen Durchbrechungen (17) eine radial vorstehende Rippe (23) umfasst, die ausgebildet ist, um den Ringkörper (5') um das weibliche Ansatzstück (2') zu halten.

## Claims

1. A tubular coupling (1, 1'), **characterized in that** it comprises a female endpiece (2, 2') presenting a tubular hollow body (3) that extends along an axial direction (A) and that forms an axial orifice (4) into which a male endpiece (6) provided with a collar (7) is designed to be inserted axially, **in that** said hollow body (3) of said female endpiece (2, 2') comprises a latching locking member (11, 11') that extends axially along said hollow body (3) and that is designed to be deformed elastically in a radial direction by mechanical interference with said collar (7) during said insertion of said male endpiece (6) into said orifice (4) of said female endpiece (2, 2') and to become locked against the back of said collar (7) when said male endpiece (6) is pushed fully into said orifice (4) of said female endpiece (2, 2'), **in that** it further comprises a ring (5, 5') mounted to slide coaxially with said orifice (4) around said female endpiece (2, 2') and that forms a ramp (18) that is oblique relative to the axial direction and that is inclined radially towards the outside of said hollow body (3) in order to deform said locking member (11, 11') elastically in a radial direction by the lever effect when said ring (5, 5') is subjected to axial traction in the direction for inserting said male endpiece (6) into said female endpiece (2, 2') so as to release said male endpiece (6) from said female endpiece (2, 2').

2. A tubular coupling (1, 1') according to claim 1, **characterized in that** said locking member (11, 11') comprises two latching fingers (11, 11') that are distributed around said orifice (4) of said female endpiece (2, 2'), each latching finger (11, 11') including two lateral shoulders (14), and **in that** said ring (5, 5') forms, for each latching finger (11, 11'), two parallel oblique ramps (18) against which said two lateral shoulders (14) of the latching finger (11, 11') bear respectively.

3. A tubular coupling (1, 1') according to claim 2, **characterized in that** said ring (5, 5') has two lateral openings (17) distributed around the peripheral outline of said ring (5, 5'), each bordered by each two parallel ramps (18).

4. A tubular coupling (1, 1') according to claim 3, **characterized in that** said two parallel ramps (18) are joined together by a web (19) of reinforcing material.

5. A tubular coupling (1) according to claim 2, **characterized in that** said two lateral shoulders (14) of a latching finger (11) form portions of a lateral rib (14') that slide axially in the groove (20) of said ring (5) .

6. A tubular coupling (1) according to any preceding claim, **characterized in that** said ring (5) is held around said female endpiece (2) by clips (15).

7. A tubular coupling (1') according to claim 3 or claim 4, **characterized in that** said ring (5') includes respective radially projecting ribs (23) at the lateral openings (17), each rib being arranged to hold said ring (5') around said female endpiece (2').
